# EUROPEAN PATENT SPECIFICATION

(11) **EP 0 373 200 B1**
(45) Date of publication and mention of the grant of the patent: **17.05.1995**
(21) Application number: 89904900.1
(22) Date of filing: 31.03.1989
(51) Int. Cl.: G01C 19/72, G01B 9/02

(54) **Sagnac Ring Rotation Sensor and Method of Use thereof**
Sagnac-Ring Rotations-Sensor und Verfahren zu dessen Verwendung
Senseur de rotation à anneau Sagnac et méthode de son utilisation

(30) Priority: 19.04.1988 US 183607
(43) Date of publication of application: 20.06.1990
(73) Proprietor: LITTON SYSTEMS, INC., Beverly Hills, CA 89210 (US)
(72) Inventor: PAVLATH, George, Attila, Thousand Oaks, CA 91360 (US)
(74) Representative: Rushton, Ronald
(86) International application number: US8901355
(87) International publication number: WO8910534

(56) References cited:
- GB-A- 2 009 396
- GB-A- 2 058 397
- GB-A- 2 100 855
- US-A- 4 514 088

## Description

This invention relates generally to Sagnac ring rotation sensors and their use.

A fiber optic ring interferometer typically comprises a loop of fiber optic material that guides counter-propagating light waves. After traversing the loop, the counter-propagating light waves are combined so that they constructively or destructively interfere to form an optical output signal. The intensity of the optical output signal varies as function of the interference, which is dependent upon the relative phase of the counter-propagating waves.

Fiber optic ring interferometers have proved to be particularly useful for rotation sensing. Rotation of the loop creates a relative phase difference between the counter-propagating waves in accordance with the well known Sagnac effect. The amount of phase differnece is a function of the angular velocity of the loop. The optical output signal produced by the interference of the counter-propagating waves varies in intensity as a function of the rotation rate of the loop. Rotation sensing is accomplished by detecting the optical output signal and processing it to determine the rotation rate.

It is known from GB-A-2009396 to provide a gyroscope of this type, having the features of the pre-characterising portion of Claim 1, i.e. a substrate of optically active material formed with waveguides coupled to a fiber optic sensing coil, and a polariser for signals propagating in the waveguides. By way of background, it is also known from US-A-4514088 to provide polarisation control in a resonant ring laser gyroscope.

In order to be suitable for inertial navigation applications, a rotation sensor must have a very wide dynamic range. The rotation sensor must be capable of detecting rotation rates as low as 0.01 degrees per hour and as high as 1,000 degrees per second. The ratio of the upper and lower limits to be measured is approximately 10⁹.

It is well known that in many fiber optic systems it may be desirable to have light of a known polarisation state at selected points. The output of some components is polarisation dependent. Therefore, having a known polarisation input to such components minimises errors. The state of polarisation is particularly important in a device such as an optical fiber rotation sensor. In a polarised optical fiber rotation sensing system, drift errors due to changes in polarisation are determined by the quality of the polariser.

Bias error is the primary source of error in using fiber optic Sagnac rings as rotation sensors. The bias of a rotation sensor is the signal output when there is no signal input. If the bias is constant, then it may be subtracted from the output signal when there is a signal input to determine the response of the rotation sensor to the input signal. However, the bias does not remain constant over time and temperature variations; therefore simply subtracting an error from the output of a rotation sensor is generally unsatisfactory.

Accordingly, the invention provides a Sagnac ring rotation sensor as defined in Claim 1, and a method as defined in Claim 5 of using such a sensor. The invention includes optical components formed on the integrated optics module to perform the requisite functions for an interferometric fiber gyroscope in a manner that provides advantages over prior fiber optic rotation sensors. The present invention provides bias reduction, noise reduction, and improvement in scale factor linearity and repeatability.

The chip may be fabricated from an electro-optic material using conventional waveguide fabrication techniques such as titanium infusion into LiNbO₃. Three integrated optics waveguides form a Y-coupler in which a first waveguide forms the stem of the Y and the second and third waveguides form the legs. Light incident in the stem of the "Y" from a first optical fiber is split equally between the two legs of the "Y" and coupled into second and third optical fibers, respectively. Similarly, light incident upon the legs of the "Y" from the second and third fibers mixes in the stem of the "Y" and couples into the first fiber. The legs of the Y-coupler preferably differ in length by at least one coherence length of the light waves. The distance between the Y-coupler and the polarising means formed on the stem is preferably greater than the depolarisation length of the light waves. The invention also preferably includes means for modulating the birefringence of the wave guide that forms the stem of the Y-coupler.

The polarising means preferably comprises a first metal film deposited on the surface of each waveguide adjacent its connection with the corresponding optical fiber. The polarising means for each waveguide is preferably at least one depolarisation length of the light from the respective adjacent edge of the substrate.

The means for modulating the birefringence of the junction preferably comprises a plurality of electrodes formed on the substrate. A first electrode is spaced apart from the junction of the waveguides. A second electrode is spaced apart from the junction of the waveguides such that the junction is between the first and second electrodes. A third electrode lies between the first and second electrodes over the junction of the three waveguides. The apparatus further includes means for applying electrical signals to the three electrodes to form two perpendicular electric field components in each of the three waveguides to adjust the refractive indices of the waveguides.

The differential phase modulating means also preferably comprises a plurality of electrodes formed on the substrate. A first electrode lies between the second and third waveguides. A second electrode is formed on the substrate such that the second waveguide is between the first and second electrodes. A third electrode is formed on the substrate such that the third waveguide is between the first and third electrodes. The present invention preferably includes means for applying a first electrical singal between the first and second electrodes to control a refractive index of the second waveguide and means for applying a second electrical signal between the first and third electrodes to control a refractive index of the third waveguide. The invention also preferably includes means for applying electrical signals to the electrodes for controlling the birefringence of the second and third waveguides.

The coupling means is preferably placed at a location at least one depolarisation length from the polariser in the stem of the Y-coupler. The ends of the other two waveguides are polished at angles such that their lengths differ by more than one coherence wavelength, which for superluminescent diodes is approximately 50 ».

Embodiments of the invention will now be described, by way of example only, with reference to the accompanying drawings, in which:
Figure 1 illustrates a plan view of an integrated optics module according to the present invention showing optical components mounted on a substrate for forming a fiber optic rotation sensor;
Figure 2 illustrates a pair of optical fibers coupled to corresponding optical waveguides formed in the substrate of Figure 1 and also shows a pair of polarisers formed on the substrate to polarise light propagating in the waveguides;
Figure 3 illustrates a third optical fiber coupled to a third waveguide formed in the substrate;
Figure 4A schematically illustrates the integrated optics module according to the present invention used for form a fiber optic rotation sensor;
Figure 4B schematically illustrates the integrated optics module according to the present invention used for form a second embodiment of a fiber optic rotation sensor;
Figure 5A is a top plan view of a non-reciprocal configuration of a fiber optic rotation sensor for low accuracy applications of the integrated optics module according to the present invention;
Figure 5B is an end elevation view of the apparatus of Figure 5A;
Figure 6 is a perspective view of a birefringence modulator that may be formed on the integrated optics module according to the present invention;
Figure 7 is a first end elevation view of the birefringence modulator of Figure 6 showing electric fields that are perpendicular to the upper surface of the module of Figure 6 and that extend through a waveguide formed in the module;
Figure 8A-8E illustrate steps in forming an optical waveguide in the substrate of Figure 1;
Figure 9 is a perspective view of a differential phase modulator that may be formed in the integrated optics module according to the present invention in the present invention;
Figure 10 is a cross sectional view of the differential phase modulator of Figure 9;
Figure 11 is a cross sectional view of a polarizer that may be included in the integrated optics module of Figure 1;
Figure 12 is a cross sectional view of a polarization maintaining optical fiber that may be used with the integrated optics module according to the present invention to form a rotation sensor; and
Figure 13 illustrates a step in the formation of the polarization maintaining optical fiber of Figure 12.

### DESCRIPTION OF THE PREFERRED EMBODIMENT.

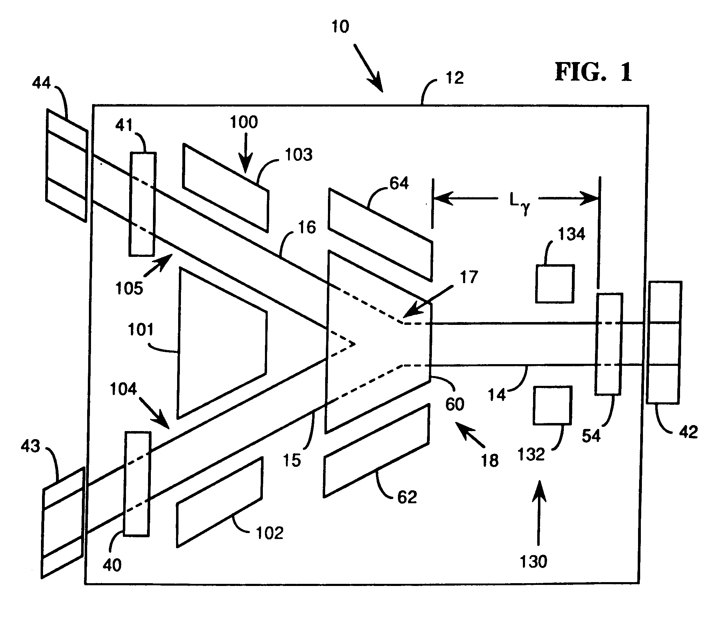

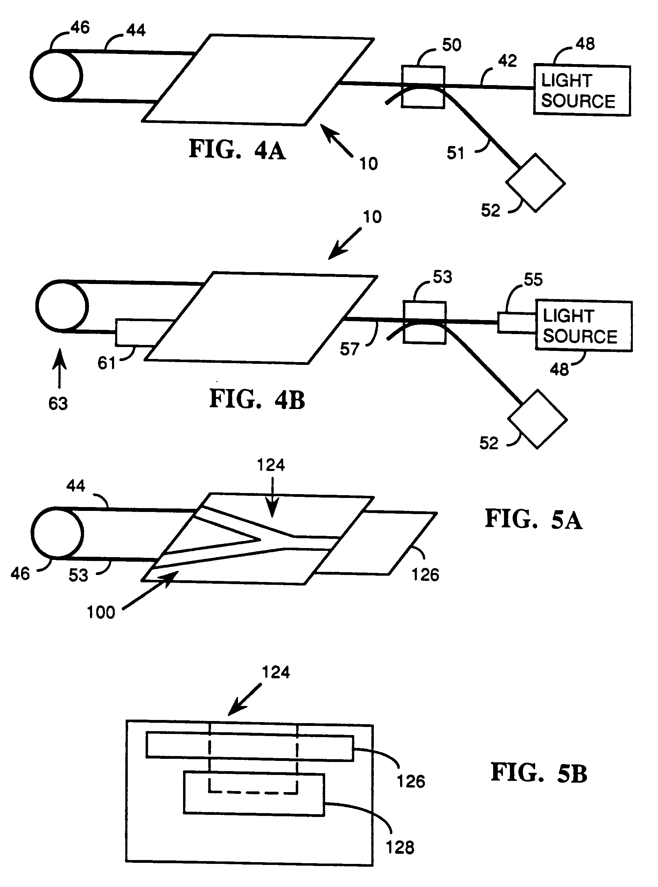

Referring to Figure 1, an integrated optics module 10 according to the present invention includes an integrated optics chip or substrate 12 having three optical waveguides 14-16 formed therein. The substrate 12 is preferably formed of an electrooptically active material such as lithium niobate. However, the invention may be practiced using other substrate materials having refractive indices that are controllable. The substrate may be made to include a magnetooptically material, an acoustooptically active material or a thermooptically active material. The waveguides 14-16 intersect at a junction 17 to form a Y-shaped coupler 18. Optical components used in forming a rotation sensor 19 are formed on the substrate 12 and are described subsequently. Rotation sensors formed using the integrated optics module 10 are illustrated in Figure 4A, 4B and 5A, which are described in detail subsequently.

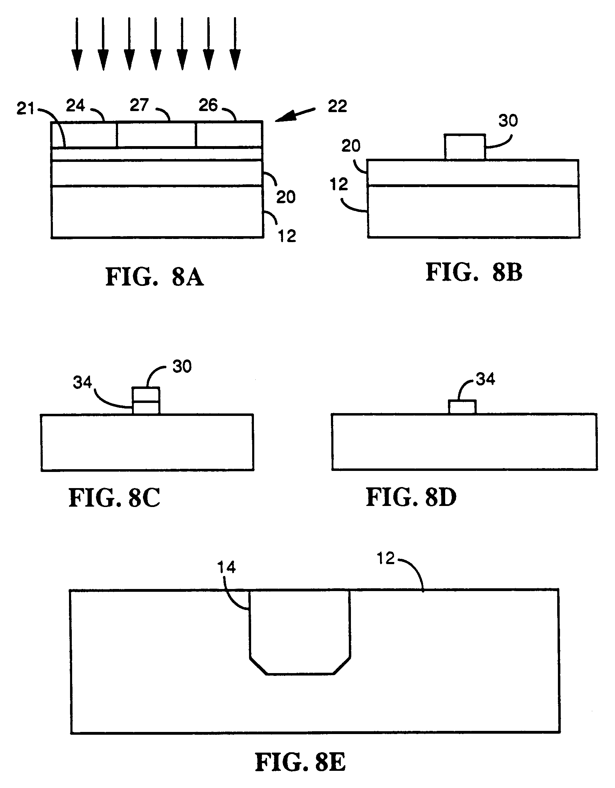

Figures 8A-8E illustrate formation of the optical waveguide 14 in the substrate 12. Initially the substrate 12 is covered with a metal layer 20 and then a photoresist layer 21. A glass photomask plate 22 is placed on the photoresist layer 20. The plate 22 is prepared by using standard photoreduction techniques to generate a desired pattern on which portions 24 and 26 are opaque and spaced apart to leave an elongate transparent rectangular portion 27. The arrows in Figure 8A indicate ultraviolet (UV) light impinging upon the glass plate 22 and the exposed portion 27 of the photoresist layer 21. The portions 24 and 26 are opaque to the UV light so that the UV light affects only the exposed portion 27 of the photoresist layer 21. Referring to Figure 8B, placing the photoresist portion 27 in a suitable developer leaves attached to the substrate 12 only a photoresist portion 30, which was immediately subjacent to the transparent region 27, respectively.

Referring to Figure 8C, a titanium strip 34 is formed on the substrate 12 by placing the clip in a suitable etchant which removes the titanium except where it is protected by the photomask 30.

Placing the substrate 12 in a solvent such as acetone removes the photoresist portion 30, leaving only the well-defined layer 34 of titanium, shown in Figure 8D, on the substrate 12. The layer 34 has a substantially rectangular cross section as viewed from the end as in Figure 8D. The substrate 12 with the titanium layer 34 thereon is placed in a high temperature oven, as is well-known in the art, and baked a time sufficient to cause diffusion of Ti⁺⁺ ions into the substrate 12 to form the generally rectangular waveguide 14 shown in Figure 8E.

Referring again to Figure 1, the integrated optics module 10 may be used to form a fiber optic rotation sensor. In forming a rotation sensor optical fibers 42-44 may be butt-coupled to the waveguides 14-16, respectively. The optical fibers 42 and 43 may be separate fibers or they may be opposite ends of one fiber that is configured as a sensing loop 46, shown in Figure 4A.

Light may propagate into the chip 12 from any of the optical fibers 42-44. Light incident upon the chip 12 from the fiber 42 couples into the waveguide 14, which forms the stem of the Y-shaped coupler 18. Upon reaching the junction of the waveguides 14-16, light input from the fiber 42 divides equally between the waveguides 15 and 16. Light incident upon the chip 12 from the fiber 43 couples into the waveguide 15 and then propagates to the junction 17 where it enters the waveguide 14. Similarly, light incident upon the chip 12 from the fiber 44 couples into the waveguide 16 and propagates to the junction 17. Light beams propagating toward the junction 17 in the waveguides 15 and 16 combine according to the well-known principle of superposition and propagate in the waveguide 14 toward the fiber 42.

Referring to Figure 4A, a fiber optic rotation sensor 45 includes a light source 48 that provides light to the optical fiber 42, which is preferably a polarization maintaining fiber. The light source 48 may be a superluminescent diode (SLD). A polarization maintaining fiber has refractive indices that differ significantly for the two orthogonal linear polarizations. Ordinary optical fiber has refractive indices that are nearly equal for both polarizations. An electromagnetic wave may be characterized by a propagation constant that is a function of the refractive index of the medium in which the wave propagates. If the propagation constants for polarization components (polarization modes) in the same waveguide are nearly equal, energy readily couples between them. The result is a signal of varying polarization, which is undesirable in a rotation sensing system. Polarization maintaining fiber has propagation constants that differ sufficiently to prevent appreciable coupling between the two polarizations. Therefore the intensity of each polarization remains constant, and the net polarization is held constant.

Since the light input to the fiber 42 has polarization components along both of the fiber axes, both of these polarizations will propagate in the fiber without mixing together in the polarization maintaining fiber. The polarization maintaining fiber 42 may be formed by a variety of techniques described subsequently. Since all of the polarization maintaining fibers may be essentially identical, the subsequent description of such fibers refers only to the fiber 42. United States Patent Application 734,211, filed May 15, 1985 and assigned to Litton Systems, Inc., owner of the present invention, discloses a structure and method of fabrication of a polarization maintaining optical fiber that may used in forming the rotation sensor 10.

Since the velocity of light in the fiber 42 is v = c/n, where c is the speed of light in a vacuum and n is the refractive index of the fiber for the particular polarization under consideration, the two polarizations have different velocities in the fiber. The slow wave has velocity vₛ = c/nₓ, and the fast wave has velocity v_{f} = c/n_{y}, where n_{y} < nₓ.

One type of polarization maintaining fiber has a layered core 70 and a surrounding cladding 72 as shown in Figure 12. The core 70 has different refractive indices for waves of different polarization so that the propagation constants of the core are polarization-dependent. The core 70 and cladding 72 have refractive indices such that the cladding index is less than both core indices. Therefore, the polarization maintaining fiber guides light of both polarizations. Since the propagation constants of the core are different, or non-degenerate, for the two polarizations, energy does not readily couple between them. Therefore, light propagated by the polarization maintaining fiber 42 experiences no change in polarization.

A core having birefringent properties can be synthesized by properly choosing materials for the core layers to have particular refractive indices and by properly choosing the fractional thicknesses f₁ and f₂ as shown in Figure 13. Referring to Figure 12, the core 70 is comprised of layers 78-80 of a first material and layers 82 and 84 of a second material having an index of refraction different from the first material. The core 70 may comprise many layers of the two materials, but only the five layers 78-80 and 82 and 84 are shown for convenience of illustration and explanation.

Unlike ordinary optical fibers, the form birefringent single mode fiber 42 will maintain the polarization state of a wave propagating therein. In the fiber 42 the difference between the refractive indices for the two polarizations is sufficiently large that there is a substantial difference between the propagation constants of waves having the two orthogonal polarizations. The difference between the propagation constants eliminates the degeneracy between the polarization states and prevents waves of one polarization from coupling to the other polarization under ordinary conditions. Coupling of energy between waves requires that the waves have essentially the same velocity. If the velocities are different, there is no appreciable coupling between the two states.

Referring to Figure 13, a method of fabricating a polarization maintaining fiber as shown in Figure 12 involves first forming a stack 86 of alternating layers of materials 87 and 88 having different refractive indices. The stack 86 is heated to form an essentially monolithic block. The block may then be drawn through a succession of dies, or otherwise stretched by methods well-known in the art, to reduce its dimensions to values suitable for use as the core 70. Before drawing, the block may be ground to form a cylinder in order to produce a core having a circular cross section. A cladding having a refractive index less than both refractive indices of the core 70 may be added thereto by any of several standard techniques, such as fusing bulk silicon dioxide, SiO₂, onto the core, collapsing SiO₂ tubing onto the core, or by reactive deposition of SiO₂ from a gaseous mixture.

GeO₂ (n₂ = 1.593) may be used as the high index component and Si0₂ as the low index component in the stack 86. Both silica and germania are used in virtually all single mode and multimode fibers because of their low loss and physical compatibility. Combined inhomogeneously with proper fractional thickness they form the core 70 with both nₓ and n_{y} being large enough to be clad by fused silica.

Well established optical fabrication techniques can be used to fabricate the SiO₂ plates from pure bulk SiO₂. The GeO₂ component may be too thin to be formed by mechanical fabrication techniques. The GeO₂ layer may be formed by sputtering a GeO₂ film onto an SiO₂ substrate. The GeO₂ layer may also be formed by coating the SiO₂ with a layer of Ge and oxidizing it to GeO₂ in a tube furnace.

Other types of high birefringence fiber suitable for use as the polarization maintaining fiber 42 are described in the following-listed U.S. Patents:
U.S. Patent 4,549,781 issued October 29, 1985 to Bhagavatula *et al.* for Polarization-Retaining Single-Mode Optical Waveguide;
U.S. Patent 4,529,426 issued July 16, 1985 to Pleibel *et* *al.* for Method of Fabricating High Birefringence Fibers;
U.S. Patent 4,465,336, issued August 14, 1984 to Huber *et al.* for Waveguide and Method of Manufacturing Same; and
U.S. Patent 4,561,871 issued December 31, 1985 to Berkey for Method of Making Polarization Preserving Optical fiber.

Light from the light source 48 is launched into the polarization maintaining fiber 42 by conventional means. The light then propagates to a coupler 50 where a portion of the incident light is coupled into the free end of a fiber 51. Light remaining in the fiber 42 then reaches the module 10 shown in detail in Figure 1. The coupler 17 divides the source light essentially equally between the waveguides 15 an 16, which cooperate with the sensing coil 46 to form the clockwise and counterclockwise waves.

Referring again to Figure 4A, the clockwise and counterclockwise waves traverse the sensing loop 46 and then combine at the junction 17 to form an interference pattern. The waves that form this interference pattern propagate in the waveguide 14 to the fiber 42. An optical coupler 50 formed in the fiber 42 couples part of the optical signal containing the interference pattern into a fiber 51 that guides the light to a detector 52. The detector 52 forms electrical signals indicative of the interference pattern. These electrical signals are then processed to determine the rotation rate and angular displacement. Processing circuitry for determining the rotation rate and angular displacement is described in U.S. Patent Application Serial No. 031,323.

Referring to Figures 1 and 4A, light input to the waveguide 14 from the source 48 propagates through a first polarizer 54 formed on the substrate 12. The polarizer 54 may be fabricated from a metallic or dielectric and metallic overcoating on a localized region of the waveguide 14. Undesired polarization components in the light wave input to the waveguide 14 couple out of the waveguide 14 into the material that forms the polarizer 54. Light of the desired polarization remains in the waveguide 14. For simplicity in explaining the invention it is assumed that the desired polarization component lies in the plane of the substrate 12 and points toward the top of the page containing Figure 1.

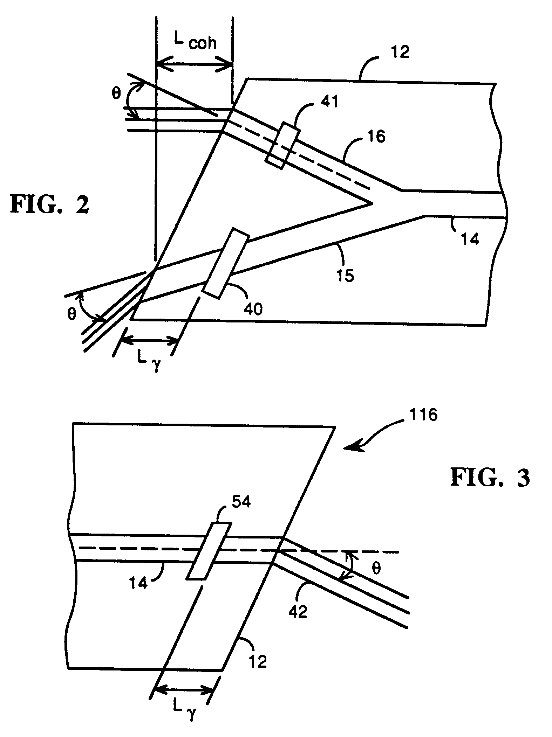

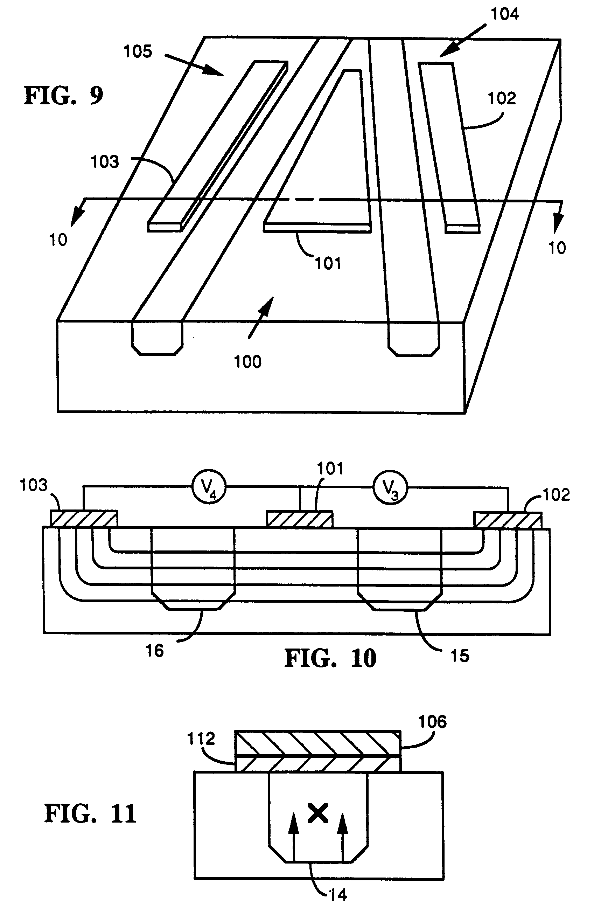

Since the polarizers 40, 41 and 54 are preferably essentially identical, only the polarizer 54 is described in detail herein. Referring to Figure 11, a metal strip 106 is placed on the lithium niobate chip 12 over the waveguide 14. The metal strip 106 is preferably formed of aluminum. A dielectric buffer layer 112 may be placed between the strip 106 and the lithium niobate chip 12. The polarizer 54 passes the horizontally polarized component of incident light and attenuates the vertically polarized component. As shown in Figure 3, the polarizer 54 is preferably placed so that the distance between it and the edge of the substrate 12 that abuts the fiber 42 is at least one depolarization length of the light output from the optical source 48. The depolarization length is the propagation distance required for the polarizations of the input light to lose correlation. In a preferred method of constructing a rotation sensor including the module 10, the polarizations passed between the polarizer 54 and the birefringence modulator 18 are decorrelated.

Similarly, referring to Figure 2, the distances between the polarizers 40 and 41 and the adjacent edge of the substrate 12 should each equal the depolarization length of the light from the optical source 48. The edge of the substrate 12 adjacent the polarizers 40 and 41 is preferably polished at an angle so that the waveguides 14 and 15 have different lengths. The difference of the lengths of the waveguides 14 and 15 is preferably greater than to the coherence length of the light output from the source 48 to prevent backward reflections from being correlated and producing an interference pattern and a bias error. The ends of the fibers 42-44 and the adjacent edges of the substrate 12 are preferably polished such that refraction at the interfaces between the fibers and the substrate are at the Brewster angle to minimize backward reflections.

Referring again to Figures 1 and 4A, after propagating past the polarizer 54 the light input to the module 10 from the source 48 propagates through a birefringence modulator 130, which is comprised of a pair of electrodes 132 and 134 formed on opposite sides of the waveguide 14. The birefringence modulator 130 controls the birefringence of the waveguide 14.

The light in the first waveguide 14 then propagates through a birefringence modulator 18. The birefringence modulator 18 and the polarizer 54 are preferably separated by a distance equal to the depolarization length of the light in the waveguide 14. The birefringence modulator 18 controls the refractive indices of the junction 17 for the two polarizations that may be guided thereby. The junction 17 has refractive indices that depend on the polarization of the light they may guide. If the direction of propagation is the y-axis, then the linear polarization components are along the x and z-axes. The refractive indices for a light wave in the waveguide are therefore written as nₓ and n_{y}. The difference between the refractive indices nₓ and n_{y} for a waveguide is the birefringence of the waveguide.

Since the velocity of a light wave in the junction 17, for example, is v = c/n where c is the free space speed of light, changing the refractive indices changes the speed of the wave in the region of the birefringence modulator 18. The transit time of the wave through the birefringence modulator 18 depends upon the speed of the wave. Therefore, changing the speed of a wave changes its transit time. Changes in the transit time are seen as changing the portion of the sinusoidal light wave that exists at the output end of the birefringence modulator 18. Therefore, changing the refractive indices changes or modulates the phase of the two linear polarizations of the light wave in a different manner. The birefringence modulators 18 and 55 provide a controllable phase retardation between the two linear polarizations of at least 2π radians can be achieved in the junction.

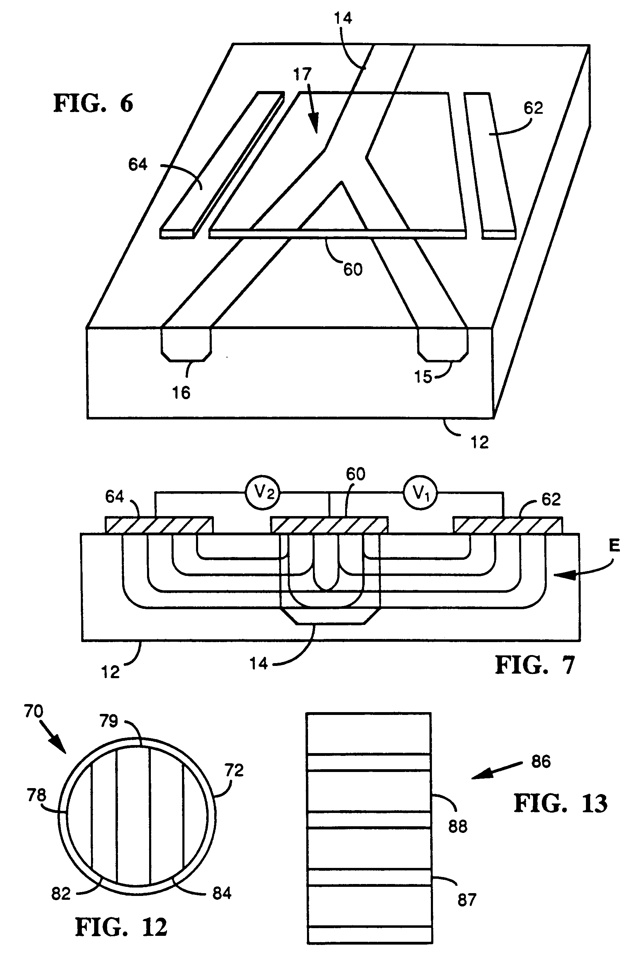

Referring to Figures 1 and 6-8, the birefringence modulator 18 includes an electrode 60 placed directly over the junction 17 and adjacent parts of all three waveguides 14-16. The birefringence modulator 18 also includes a pair of electrodes 62 and 64 formed on the lithium niobate chip 12 on opposite sides of the electrode 60 and laterally displaced therefrom. Referring to Figure 7, a first voltage source V₁ is connected between the center electrode 60 and the electrode 62 and a second voltage source V₂ is connected between the electrodes 60 and 64 to form electric fields in the junction 17. These electric fields also extend through the waveguides 14-16 in a manner similar to that shown for the junction 17.

As shown in Figure 7, the electric fields from the electrodes 60 and 64 and 62 and 64 are perpendicular to the junction 17. Referring to Figure 7, the field between the central electrode 60 and the electrode 62 is primarily vertical in the junction 17 as viewed in that Figure.

The substrate 12 is formed of an electrooptically active material such as lithium niobate, which has refractive indices of the form n = nₒ + n₁(E), where nₒ is a constant component of the refractive index and n₁(E) is a function of the applied electric field **E**. Since the electric field in the junction 17 is essentially in the vertical direction as viewed in Figure 7, only the vertical component of the field affects the refractive index. Changes in the refractive of the junction 17 cause its effective optical length to change. Therefore, controlling the electric fields applied to the junction 17 provides means for controlling the difference between the refractive indices of the junction 17 for the two polarizations. The birefringence modulator 18 preferably is capable of adjusting the refractive indices of the junction 17 to provide a controllable phase retardation of at least 2π rad in the junction. Since the birefringence modulator 18 is mounted on the substrate 12 at the junction 17, the coupling region of the Y-coupler must have sufficient length to permit the application of electric fields adequate to provide the 2π rad retardation. The birefringence modulator 18 and the polarizer 54 cooperate to reduce noise and bias error in a fiber optic rotation sensor that includes the module 10.

Referring to Figures 1, 9 and 10, light propagating in the waveguides 15 and 16 passes through a differential phase modulator 100. The differential phase modulator 100 includes three electrodes 101-103 mounted to the substrate 12. The electrode 101 is mounted between the waveguides 15 and 16. The electrodes 102 and 103 are mounted to the substrate 12 so that the waveguide 15 is between the electrodes 101 and 102 and the waveguide 16 is between the electrodes 101 and 103. The electrode pairs 101 and 102 and 101 and 103 each comprise a phase modulator 104 and a phase modulator 105, respectively. In combination the two phase modulators serve to provide a difference in the phase of light propagating in the two waveguides 15 and 16.

Since the phase modulators 104 and 105 have substantially identical structures, only the phase modulator 104 is described in detail. Referring to Figures 10 and 11, the phase modulator 104 comprises a portion of the optical waveguide 15 and the electrodes 101 and 102. The electrodes 101 and 102 may be formed on the substrate 12 by vapor deposition of aluminum. Application of a voltage across the electrodes 101 and 102 produces a horizontal electric field in the waveguide 15 and changes its refractive index 15 by means of the electro-optic effect as explained above for the birefringence modulator. The transit time of a light wave through the phase modulator 104 is the product of the length of the waveguide 15 affected by the electrodes 101 and 102 and the refractive index of the waveguide 15 divided by the speed of light in vacuum. Because of the sinusoidal nature of the electromagnetic fields that comprise the light wave, the change in transit time is seen as a change in phase of the wave. The differential phase modulator 100 permits the use of a serrodyne technique for closed loop operation of a fiber optic rotation sensor.

In the differential phase modulator 100 the phase of the light is advanced in one of the waveguides 15 or 16 and retarded in the other. The light in the waveguide 15 then propagates through a second polarizer 40 before reaching the optical fiber 43. The light in the waveguide 16 propagates through a third polarizer 41 before reaching the optical fiber 44. The fibers 43 and 44 may be butt coupled to the substrate so that the fiber cores are aligned with the waveguides to transfer light therebetween, but the present invention is not limited to this type of coupling. The second and third polarizers 40 and 41 apply identical polarization effects to light guided by the waveguides 15 and 16, respectively. The differential phase modulator 100 and the polarizers 40 and 41 cooperate to ensure high scale factor linearity and repeatability.

The differential phase modulator 100 may also be operated as a birefringence modulator. Application of suitable voltages to the electrodes 101-103 permits controllable changes to be made in the birefringence of the waveguides 15 and 16.

Referring to Figure 2, the left edge of the integrated module of the present invention preferably is angle polished such that the lengths of two waveguides 15 and 16 extending from the coupling region 17 differ in length by more than one coherence length L_{coh} of the light guided thereby. For a super luminescent diode (SLD) light source the coherence length is approximately 50 »m. The ends of the fibers 43 and 44 are so polished that refraction form the waveguide into the fiber or *vice versa* satisfy Snell's Law to maximize transmission at the fiber/waveguide interfaces. In addition, the second and third polarizers, 40 and 41 are preferably located that the distance from the polarizer to the adjacent edge 114 of the substrate 12 where the fibers 43 and 44 couple to the waveguides 15 and 16, respectively, is at least one depolarization length (Lγ).

Referring to Figure 3, the polarizer 54 is also preferably located at least one depolarization from the edge 116 of the substrate 12. The edge 116 and the end of the fiber 42 adjacent the edge 116 are also chosen so that Snell's Law is satisfied to obtain maximum transmission.

The optical fiber 42, the polarizer 54 and the birefringence modulators 18 and 130 act together to reduce noise and bias error in the fiber optic rotation sensors formed using the integrated optics module 10. The differential phase modulator 100 permits implementation of a serrodyne technique for closed loop operation of the fiber optic gyroscope. The differential phase modulator may be used to control the birefringence of each of the waveguides 15 and 16 and to control the difference of the birefringence of these waveguides. The second and third polarizers 40 and 41 are used to ensure proper operation of the differential phase modulator 100 by ensuring that only one polarization passes through the modulator. The polarizers 40 and 41 ensure high scale factor linearity and repeatability by filtering out the unwanted polarization.

Figure 4A illustrates operation of the invention with polarized light. A polarization maintaining directional coupler 50 guides light from the optical source 48 to the module 10. The principle axes of the polarization maintaining fiber 42, 43 and 44 are aligned with the principle axes of the waveguides 14-16 in the integrated optics module 10 and normal to the *p-n* junction (not shown) in the superluminescent diode 48. This configuration gives maximum optical signal throughput from the superluminescent diode 48 to the photodetector 52.

The light input to the module 10 divides at the junction 17 and propagates out to the second optical fiber 43 and the third optical fiber 44. Upon exiting the integrated optics module 10 the light forms inputs to the sensing coil 46, which is also formed of polarization maintaining fiber for polarized operation of the invention. The two light beams exiting the module 10 become counterpropagating light beams in the sensing coil 46. After traversing the sensing coil 46 and undergoing a phase shift indicative of the rotation rate of the coil 46 about a line through the plane of the coil, the light waves re-enter the integrated optics module 10.

The two light beams reenter the integrated optics module 10 at the waveguides 15 and 16. The wave entering waveguide 15 propagates past the polarizer 40 and the differential phase modulator 100 before reaching the junction region 17. The wave entering waveguide 16 propagates past the polarizer 41 and the differential phase modulator 100 before reaching the junction region 17 where the two waves recombine. The birefringence modulator 18 controls the birefringence of the junction 17. The differential phase modulator 100 also functions as a birefringence modulator. The recombined waves form an interference signal pattern that is indicative of the Sagnac phase shift of the waves in the sensing coil 46. After combining in the junction 17, the waves propagate through the birefringence modulator 130 and the polarizer 54. Therefore, birefringence modulation is provided at the junction 17 and in each of the waveguides 14-16.

The signal carrying the interference pattern propagates beyond the birefringence modulator to the polarizer 54 the stem 14, through the first polarizer 12, and into the optical fiber 42. The directional coupler 50 couples the signal into an optical fiber 51, which guides the signal to a photodetector 52. The photodetector 52 produces an electrical signal indicative of the intensity of the interference pattern of the light propagating out of the gyroscope 45.

Changes in rotation of the gyroscope 45 change the intensity of the interference pattern, which in turn changes the intensity of the electrical signal produced by the photodetector to indicate the intensity of the interference pattern.

Figure 4B illustrates operation of the invention with unpolarized light. In Figure 4B a length of polarization maintaining fiber 55 receives light from the optical source 48. The polarization maintaining fiber is butt-coupled to a single mode fiber 57, which then guides the light to a single mode coupler 53. Some of the light propagates in the in the fiber 57 to the module 10. A length of polarization maintaining fiber 61 is mounted between the waveguide 15 and a sensing coil 63, which is formed of ordinary single mode fiber. The polarization maintaining fibers 55 and 61 preferably have lengths of 1 to 10 meters.

The principle axes of the two polarization maintaining fiber lengths 55 and 61 are oriented at 45° and to the semiconductor junction in the light source 48 to the principle axes of the waveguide 15 in the module. This configuration gives an additional 6 db of loss from the light source 48 to the photodetector 52 beyond the loss associated with operation of the invention with polarized light as described above with reference to Figure 4A. This configuration shown in Figure 4B however, can use conventional single mode fiber coils 63 and components, which can reduce the cost of the instrument.

The integrated module 10 of Figure 1 can be used in any fiber optic gyroscope structure. If only polarized operation is required, the second and third polarizers 40 and 41 can be omitted. If high bias errors are acceptable, then the birefringence modulator 18 can be omitted. The differential phase modulator 100 may be operated as a birefringence modulator to provide control of the birefringence of the waveguides 15 and 16. The birefringence modulator 130 controls the birefringence of the waveguide 14. If high bias errors are acceptable, then the differential phase modulator 100 and the birefringence modulator 130 provide adequate control of the birefringence in the module 10. If still higher fiber levels of bias errors permitted in the particular application, then the polarizer 54 can also be omitted.

Referring to Figure 5, a nonreciprocal configuration can be used for the lowest accuracy applications. In this configuration, an optical source 126 and a photodetector 128 are attached to the right edge of an integrated module 124, which contains only the waveguides 14-16, coupler 18, and the differential phase modulator 100. Referring to Figure 5B, the optical source is mounted directly on the end of the waveguide 14. The edge of the module may be angle polished to minimize loss and backreflections. The detector is located below the optical source to intercept the nonreciprocal wave from the waveguide 14. This configuration can be advantageous in high acceleration environments due to the small number of optical interconnects required.

One or more of the devices described with reference to Figure 1 for providing birefringence modulation may be included in the device of Figure 5 if needed to reduce the non-reciprocities.

## Claims

1. A Sagnac ring rotation sensor comprising an optical fiber sensing coil (46); an optical fiber (42) arranged for receiving light from an optical source (48); and an integrated optics module (10) for mounting between the optical fiber sensing coil (46) and the optical fiber (42) that receives light from the optical source (48) in use; the integrated optics module comprising: a substrate (12) formed of an optically active material having controllable refractive indices; a plurality of optical waveguides (14-16) formed in the substrate (12) and connected at a junction (17) to form a Y-coupler (18); a first one of the waveguides (14) being configured for connection to the optical fiber (42) for receiving optical signals from the optical source (48); a second and a third of the waveguides (15-16) being configured for connection to opposite ends of the optical fiber sensing coil (46); and means (40, 41, 54) connected to the substrate (12) for polarizing optical signals propagating in each of the three optical waveguides (14-16), the arrangement being such that light from the optical source (48) in use is guided in essentially equal portions into respective opposite ends of the optical fiber sensing coil and that it recombines at the Y-coupler to form an interference pattern; the rotation sensor having coupling means (50) for guiding the interference pattern to a detector (52) for providing an output indicative of the interference pattern;
characterised by:
means (18) connected to the substrate (12) over the junction (17) for modulating the birefringence of the junction (17);
means (18) connected to the substrate (12) over a portion of the first waveguide (14) for modulating the birefringence thereof; and
differential phase modulator means (100) connected to the substrate (12) for modulating the phase difference between optical waves propagating in the second and third waveguides (15,16) and for modulating the birefringence of the second and third waveguides (15,16).

2. The Sagnac ring rotation sensor of Claim 1, wherein the means (18) for modulating the birefringence of the junction (17) includes:
a first electrode (62) connected to the substrate (12) and spaced apart from the junction (17) of the waveguides (14-16);
a second electrode (64) connected to the substrate (12) and spaced apart from the junction (17) of the waveguides (14-16) such that the junction (17) is between the first and second electrodes (62,64);
a third electrode (60) connected to the substrate (12) between the first and second electrodes (62,64) over the junction (17) of the first, second and third waveguides (14-16); and
means (V₁, V₂) for applying electrical signals to the first, second and third electrodes (60,62,64) to form an electric field component in the junction (17) that is perpendicular to the substrate (12) at the junction (17) for adjusting the difference between the refractive indices of the waveguides at the junction (17).

3. The Sagnac ring rotation sensor of Claim 2 wherein the differential phase modulating means (100) includes:
a fourth electrode (101) connected to the substrate (12) between the second and third waveguides (15,16);
a fifth electrode (102) connected to the substrate (12) such that the second waveguide (15) is between the fourth and fifth electrodes (101, 102);
a sixth electrode (103) connected to the substrate (12) such that the third waveguide (16) is between the fourth and sixth electrodes (101,103);
means (V₁) for applying a first electrical signal between the fourth and fifth electrodes (101,102) to control a refractive index of the second waveguide (12); and
means (4) for applying a second electrical signal between the fourth and sixth electrodes (101,103) to control a refractive index of the third waveguide (16).

4. The Sagnac ring rotation sensor of Claim 3 wherein the means (104,105,130) for modulating the birefringence of the first, second and third waveguides (14-16) includes:
a pair of birefringence modulating electrodes (132,134) connected to the substrate (12) on opposite sides of the first waveguide (14);
means (V₃) for applying electrical signals to the fourth and fifth electrodes (101,102) to modulate the birefringence of the second waveguide (15); and
means (V₄) for applying electrical signals to the fourth and sixth electrodes (101,103) to modulate the birefringence of the third waveguide (16).

5. A method of using a Sagnac ring rotation sensor according to any preceding claim, comprising sending light from an optical source (48) through the optical fiber (42) into the sensing coil (46), forming the said interference pattern, and using a detector (52) to respond to the interference pattern from the coupling means (50) to provide an output indicative of rotation rate.

## Patentansprüche

1. Sagnac-Ring Rotations-Sensor mit einer Lichtleitfaser-Erfassungswindung (46), einer Lichtleitfaser (42), welche derart angeordnet ist, daß sie Licht von einer Lichtquelle (48) empfängt, und einem integrierten optischen Modul (10), welcher zwischen die Lichtleitfaser-Erfassungswindung (46) und die Lichtleitfaser (42) montierbar ist, welche Licht von der in Betrieb befindlichen Lichtquelle (48) empfängt, wobei der integrierte optische Modul folgende Teile aufweist:
ein Substrat (12), welches aus einem optisch aktiven Material mit steuerbaren Brechungsindices ausgebildet ist;
mehrere optische Lichtwellenleiter (14-16), welche in dem Substrat (12) ausgebildet und an einer Abzweigung (17) verbunden sind, um einen Y-Koppler (18) zu bilden;
wobei ein erster Lichtwellenleiter (14) derart ausgestaltet ist, daß er mit der Lichtleitfaser (42) zum Empfang optischer Signale von der Lichtquelle (48) verbindbar ist;
wobei ein zweiter und ein dritter Lichtwellenleiter (15-16) zum Verbinden an gegenüberliegenden Enden der Lichtleitfaser-Erfassungswindung (46) angeordnet sind; und
wobei Einrichtungen (40, 41, 54) mit dem Substrat (12) verbunden sind, um optische Signale zu polarisieren, welche sich in jedem der drei optischen Lichtwellenleiter (14-16) ausbreiten;
wobei die Anordnung derart ausgestaltet ist, daß Licht von der im Betrieb befindlichen Lichtquelle (48) in im wesentlichen gleichen Anteilen in die jeweiligen gegenüberliegenden Enden der Lichtleitfaser-Erfassungswindung geleitet und es beim Y-Koppler zusammengeführt wird, um ein Interferenzmuster zu bilden; wobei der Rotations-Sensor eine Kopplungseinrichtung (50) zum Leiten des Interferenzmusters zu einem Detektor (52) aufweist, welcher eine Ausgangsgröße liefert, die das Interferenzmuster repräsentiert, gekennzeichnet durch:
- eine mit dem Substrat (12) über die Abzweigung (17) verbundene Einrichtung (18) zum Modulieren der Doppelbrechung der Abzweigung (17),
- eine mit dem Substrat (12) über einen Bereich der ersten Lichtwellenleiter (14) verbundene Einrichtung (18) zum Modulieren von deren Doppelbrechung, und
- eine mit dem Substrat (12) verbundene differentielle Phasen-Modulationseinrichtung (100) zum Modulieren der Phasendifferenz zwischen optischen Wellen, welche sich in dem zweiten und dritten Lichtwellenleiter (15, 16) ausbreiten, und zum Modulieren der Doppelbrechung der zweiten und dritten Lichtwellenleiter (15, 16).

2. Sagnac-Ring Rotations-Sensor nach Anspruch 1, dadurch gekennzeichnet, daß die Einrichtung (18) zum Modulieren der Doppelbrechung der Abzweigung (17) folgende Teile aufweist:
- eine erste Elektrode (62), welche mit dem Substrat (12) verbunden und beabstandet von der Abzweigung (17) der Lichtwellenleiter (14-16) angeordnet ist;
- eine zweite Elektrode (64), welche mit dem Substrat (12) verbunden und beabstandet von der Abzweigung (17) der Lichtwellenleiter (14-16) derart angeordnet ist, daß die Abzweigung (17) zwischen der ersten und zweiten Elektrode (62, 64) angeordnet ist;
- eine dritte Elektrode (60) welche mit dem Substrat (12) zwischen der ersten und zweiten Elektrode (62, 64) über die Abzweigung (17) der ersten, zweiten und dritten Lichtwellenleiter (14-16) verbunden ist; und
- eine Einrichtung (V₁, V₂) zum Anlegen elektrischer Signale an die ersten, zweiten und dritten Elektroden (60, 62, 64), um eine elektrische Feldkomponente an der Abzweigung (17) auszubilden, welche senkrecht zum Substrat (12) an der Abzweigung (17) steht, um die Differenz zwischen den Brechungsindices der Lichtwellenleiter an der Abzweigung (17) einzustellen.

3. Sagnac-Ring Rotations-Sensor nach Anspruch 2, dadurch gekennzeichnet, daß die differentielle Phasen-Modulationseinrichtung (100) folgende Teile aufweist:
- eine vierte Elektrode (101), welche mit dem Substrat (12) zwischen dem zweiten und dritten Lichtwellenleiter (15, 16) verbunden ist;
- eine fünfte Elektrode (102), welche mit dem Substrat (12) derart verbunden ist, daß der zweite Lichtwellenleiter (15) zwischen der vierten und fünften Elektrode (101, 102) angeordnet ist;
- eine sechste Elektrode (103), welche mit dem Substrat (12) derart verbunden ist, daß der dritte Lichtwellenleiter (16) zwischen der vierten und sechsten Elektrode (101, 103) angeordnet ist;
- eine Einrichtung (V₁) zum Anlegen eines ersten elektrischen Signales zwischen der vierten und fünften Elektrode (101, 102), um einen Brechungsindex des zweiten Lichtwellenleiters (12) zu steuern; und
- eine Einrichtung (4) zum Anlegen eines zweiten elektrischen Signals zwischen die vierte und sechste Elektrode (101, 103), um einen Brechungsindex des dritten Lichtwellenleiters (16) zu steuern.

4. Sagnac-Ring Rotations-Sensor nach Anspruch 3, dadurch gekennzeichnet, daß die Einrichtungen (104, 105, 130) zum Modulieren der Doppelbrechung der ersten, zweiten und dritten Lichtwellenleiter (14-16) folgende Teile aufweisen:
- ein Paar Doppelbrechungs-Modulationselektroden (132, 134), welche mit dem Substrat (12) an gegenüberliegenden Seiten des ersten Lichtwellenleiters (14) verbunden sind;
- eine Einrichtung (V₃) zum Anlegen elektrischer Signale an die vierte und fünfte Elektrode (101, 102), um die Doppelbrechung des zweiten Lichtwellenleiters (15) zu Modulieren; und
- eine Einrichtung (V₄) zum Anlegen elektrischer Signale an die vierte und sechste Elektrode (101, 103), um die Doppelbrechung des dritten Lichtwellenleiters (16) zu Modulieren.

5. Verfahren für die Verwendung eines Sagnac-Ring Rotations-Sensors nach einem der vorstehenden Ansprüche, mit den Schritten:
- Einstrahlen von Licht einer Lichtquelle (48) durch die Lichtleitfaser (42) in die Erfassungswindung (46);
- Ausbilden des Interferenzmusters; und
- Einsetzen eines Detektors (52) zum Ansprechen auf das Interferenzmuster von der Kopplungseinrichtung (50), um einen den Rotationsgrad wiedergebenden Ausgangswert bereitzustellen.

## Revendications

1. Capteur de rotation à anneau Sagnac, comportant une bobine sensible (46) de fibre optique, une fibre optique (42) agencée pour recevoir de la lumière d'une source optique (48); et un module d'optique intégrée (10) agencé pour être monté entre la bobine sensible (46) et la fibre optique (42) qui reçoit de la lumière venant de la source optique (48) lors de l'utilisation; le module d'optique intégrée comportant : un substrat (12) fait d'une matière optiquement active ayant des indices de réfraction susceptibles d'être commandés; une pluralité de guides d'ondes optiques (14-16) formés dans le substrat (12) et raccordés à une jonction (17) pour former un coupleur en Y (18); un premier des guides d'ondes (14) étant configuré pour être raccordé à la fibre optique (42) pour recevoir des signaux optiques venant de la source optique (48); un deuxième et un troisième des guides d'ondes (15-16) étant configurés pour être raccordés à des extrémités opposées de la bobine sensible (46); et des moyens (40, 41, 54) raccordés au substrat (12) pour polariser des signaux optiques se propageant dans chacun des trois guides d'ondes optiques (14-16), l'agencement étant tel que de la lumière venant de la source optique (48) lors de l'utilisation est guidée en parts essentiellement égales vers des extrémités respectives opposées de la bobine sensible et se recombine dans le coupleur en Y pour former un motif d'interférence; le capteur de rotation ayant des moyens de couplage (50) pour guider le motif d'interférence jusqu'à un détecteur (52) agencé pour délivrer un signal de sortie représentatif du motif d'interférence;
caractérisé par :
des moyens (18) raccordés au substrat (12) sur la jonction (17) pour moduler la biréfringence de la jonction (17);
des moyens (18) raccordés au substrat (12) sur une partie du premier guide d'ondes (14) pour moduler la biréfringence de celui-ci; et
des moyens modulateurs différentiels de phase (100), raccordés au substrat (12) pour moduler la différence de phase entre des ondes optiques se propageant dans le deuxième et le troisième guide d'ondes (15, 16) et pour moduler la biréfringence du deuxième et du troisième guide d'ondes (15, 16).

2. Capteur selon la revendication 1, dans lequel les moyens (18) pour moduler la biréfringence de la jonction (17) comportent :
une première électrode (62) raccordée au substrat (12) et espacée de la jonction (17) des guides d'ondes (14-16);
une deuxième électrode (64) raccordée au substrat (12) et espacée de la jonction (17) des guides d'ondes (14-16) de façon que la jonction (17) se trouve entre la première et la deuxième électrode (62, 64);
une troisième électrode (60) raccordée au substrat (12) entre la première et la deuxième électrode (62, 64) sur la jonction (17) du premier, du deuxième et du troisième guide d'ondes (14-16); et
des moyens (V₁, V₂) pour appliquer des signaux électriques à la première, la deuxième et la troisième électrode (60, 62, 64) pour former dans la jonction (17) une composante de champ électrique qui est perpendiculaire au substrat (12) à la jonction (17), pour ajuster la différence entre les indices de réfraction des guides d'ondes à la jonction (17).

3. Capteur selon la revendication 2, dans lequel les moyens modulateurs différentiels de phase (100) comportent :
une quatrième électrode (101) raccordée au substrat (12) entre le deuxième et le troisième guide d'ondes (15, 16);
une cinquième électrode (102) raccordée au substrat (12) de façon que le deuxième guide d'ondes (15) se trouve entre la quatrième et la cinquième électrode (101, 102);
une sixième électrode (103) raccordée au substrat (12) de façon que le troisième guide d'ondes (16) se trouve entre la quatrième et la sixième électrode (101, 103);
des moyens (V₁) pour appliquer un premier signal électrique entre la quatrième et la cinquième électrode (101, 102) pour commander un indice de réfraction du deuxième guide d'ondes (15); et
des moyens (4) pour appliquer un deuxième signal électrique entre la quatrième et la sixième électrode (101, 103) pour commander un indice de réfraction du troisième guide d'ondes (16).

4. Capteur selon la revendication 3, dans lequel les moyens (104, 105, 130) pour moduler la biréfringence du premier, du deuxième et du troisième guide d'ondes (14-16) comportent :
une paire d'électrodes de modulation de biréfringence (132, 134), raccordées au substrat (12) sur des côtés opposés du premier guide d'ondes (14);
des moyens (V₃) pour appliquer des signaux électriques à la quatrième et la cinquième électrode (101, 102) pour moduler la biréfringence du deuxième guide d'ondes (15); et
des moyens (V₄) pour appliquer des signaux électriques à la quatrième et la sixième électrode (101, 103) pour moduler la biréfringence du troisième guide d'ondes (16).

5. Procédé d' utilisation d'un capteur de rotation à anneau Sagnac selon l'une des revendications précédentes, où l'on envoie de la lumière d'une source optique (48) à travers la fibre optique (42) dans la bobine sensible (46), on forme ledit motif d'interférence, et l'on utilise un détecteur (52) pour répondre au motif d'interférence en provenance des moyens de couplage (50) pour délivrer un signal de sortie représentatif d'une vitesse de rotation.
